Europäisches Patentamt

European Patent Office

Office européen des brevets

(11) Numéro de publication: **0 301 930 B1**

# (12) FASCICULE DE BREVET EUROPEEN

(45) Date de publication de fascicule du brevet: **08.09.93**

(51) Int. Cl.5: **H01B 1/20,** C08G 61/02, C08L 101/00, C08L 65/00, C08G 61/12

(21) Numéro de dépôt: **88401744.3**

(22) Date de dépôt: **05.07.88**

Le dossier contient des informations techniques présentées postérieurement au dépôt de la demande et ne figurant pas dans le présent fascicule.

(54) **Film polymère composite conducteur et son procédé de fabrication.**

(30) Priorité: **31.07.87 FR 8710877**

(43) Date de publication de la demande:
**01.02.89 Bulletin 89/05**

(45) Mention de la délivrance du brevet:
**08.09.93 Bulletin 93/36**

(84) Etats contractants désignés:
**DE GB IT NL SE**

(56) Documents cités:
**EP-A- 160 207**
**EP-A- 0 184 367**

**WPIL, FILE SUPPLIER, résumé no. 86328230, Derwent Publications Ltd, Londres, GB; & JP-A-61 243 198 (HITACHI CHEMICAL) 29-10-1986**

**Synthetic Metals, 15, p. 175 - 182 (1986)**

**J. Polym. Sci., 23, No. 6, p.1687 - 1697 (1985)**

(73) Titulaire: **THOMSON-CSF**
**51, Esplanade du Général de Gaulle**
**F-92800 Puteaux(FR)**

(72) Inventeur: **Henry, François**
**THOMSON - CSF SCPI - 19, avenue de Messine**
**F-75008 Paris(FR)**
Inventeur: **Broussoux, Dominique**
**THOMSON - CSF SCPI - 19, avenue de Messine**
**F-75008 Paris(FR)**
Inventeur: **Dubois, Jean-Claude**
**THOMSON - CSF SCPI - 19, avenue de Messine**
**F-75008 Paris(FR)**

(74) Mandataire: **Guérin, Michel et al**
**THOMSON-CSF, SCPI, B.P. 329, 50, rue Jean-Pierre Timbaud**
**F-92402 Courbevoie Cédex (FR)**

EP 0 301 930 B1

**Description**

La présente invention concerne un nouveau type de film polymère conducteur de l'électricité ainsi que son procédé de fabrication.

Les couches organiques conductrices ont plusieurs domaines d'applications : le blindage électrostatique, la connectique à base de matériaux organiques, le blindage dans le domaine des ondes centimétriques, le blindage dans le domaine de l'infrarouge. Les techniques d'obtention de ces couches sont communes aux applications citées sauf pour l'utilisation en connectique où il est nécessaire de procéder à la pyrolyse de la couche pour obtenir les conductivités demandées.

La technique la plus simple pour obtenir ces couches consiste à mélanger une poudre conductrice (métal, carbone ou polymère électroactif) dans un liant macromoléculaire de type vinylique (polyisoprène, polychlorure de vinyle), de type époxy ou de type polyuréthane. Les propriétés électriques et diélectriques des couches ainsi obtenues sont fonction non seulement des propriétés de la matrice mais aussi du type de particules constituant la poudre, de leur forme (sphérique ou allongée) et de la surface spécifique de l'ensemble. Néanmoins, quel que soit le protocole de mélange utilisé pour obtenir des films chargés conducteurs, le matériau n'est que relativement homogène. Ceci est dû à la présence de microvides liés à l'existence d'agrégats de charges conductrices. Cela conduit à surcharger le matériau bien au-delà du seuil de percolation et donc à abaisser les propriétés mécaniques et filmogènes de tels films. De plus, cette technique ne permet pas de fabriquer un film à propriétés diélectriques et électriques différentes le long de l'épaisseur et qui permettraient l'adaptation d'impédance.

Une autre technique consiste à synthétiser des polymères conducteurs par dépôt électrolytique au travers d'un liant gonflé du solvant réactionnel et recouvrant l'une des électrodes. Cette méthode permet d'obtenir des films interpénétrés mais le processus aléatoire de la diffusion n'est pas contrôlable au travers de la matrice (alcool polyvinylque ou polychlorure de vinyle) et ne permet pas à ces films d'être homogènes et très chargés. L'article de DE PAOLI et autres dans le Journal of Polymer Science, Vol 23 N° 6 pages 1687-1697 (1985) décrit un tel procédé. Mais les films obtenus sont très minces.

On a également proposé de former un matériau composite conducteur utilisant un polymère conducteur, par électropolymérisation en présence d'un latex d'un autre polymère. L'article S.J. JASNE et C.K. CHIKLIS dans "Synthetics Metals", vol 15 (1986) pages 175-182, décrit ce procédé.

Pour améliorer les qualités et les possibilités d'utilisation des matériaux polymères conducteurs, la présente invention propose un film polymère composite conducteur de l'électricité, apte à être utilisé pour le revêtement d'objets, formé d'une matrice organique constitué de particules d'un latex macromoléculaire filmogène et de charges conductrices constituées par un polymère conducteur réparti dans la matrice, caractérisé en ce que le film de la matrice est constitué de particules partiellement coalescées de façon à former un reseau avec des pores entre les particules, et avec du polymère conducteur dans les pores.

L'invention a encore pour objet un procédé de fabrication d'un film polymère composite conducteur de l'électricité, caractérisé en ce qu'on forme d'abord, sur un support conducteur, une matrice organique poreuse partiellement coalescée, à partir d'un latex macromoléculaire filmogène, puis on place le support dans une cellule électrochimique et on forme du polymère conducteur dans les porcs, par électropolymérisation d'un monomère du polymère conducteur.

Le terme latex désigne une dispersion stable d'un polymère dans un milieu aqueux. Parce que la phase de coalescence des latex macromoléculaires est relativement lente, le matériau en cours de maturation présente donc une porosité nettement plus importante que les films classiques déposés à partir de l'évaporation d'un solvant.

L'invention utilise cette propriété de grande porosité des matériaux obtenus à partir de latex et qui est ajustable suivant la taille des particules utilisées pour obtenir une matrice organique parfaitement interpénétrée de polymère conducteur. Les particules de latex se déposant relativement régulièrement, les films polymères composites obtenus seront donc remarquablement homogènes si on considère un même plan de film interpénétré.

La méthode utilisée pour obtenir un film selon l'invention consiste à déposer d'abord un film polymère (ou matrice) obtenu à partir d'un latex sur une électrode puis à réaliser l'interpénétration de ce film par électropolymérisation d'un monomère conducteur dans une cellule électrochimique. La dissymétrie créée par le champ électrique entre les électrodes de la cellule électrochimique permet d'obtenir un film d'impédance ajustable au fur et à mesure que l'on passera de l'interface air-polymère à l'interface polymère-électrode. Selon l'invention, on peut en effet obtenir un film ne présentant aucune conduction à l'interface air-polymère où les charges conductrices sont bien séparées les unes des autres comme le constate l'observation microscopique, et une conduction d'ordre quasi-semiconducteur (voire même métallique) à l'interface polymère-électrode.

On peut obtenir une distribution non homogène de charges conductrices dans l'épaisseur de la matrice par électrodéposition à tension constante. Il existe ainsi un gradient de concentration en polymère conducteur selon l'épaisseur. Pour augmenter la concentration en charges conductrices et éviter l'effet d'écran, on peut procéder par électrodéposition à tension de valeur croissante pendant le processus de diffusion des charges conductrices dans la matrice.

La porosité d'un film polymère obtenu à partir d'un latex va en diminuant au fur et à mesure que les particules de latex coalescées s'interpénètrent de plus en plus. Cette étape de maturation du film dépend en partie de la nature du latex, des charges de surface et surtout de sa température de transition vitreuse par rapport à sa température de filmification. La taille des pores peut être déterminée à partir de la taille des particules de latex. Cela permet donc d'atteindre facilement le seuil de percolation en polymère conducteur. Une conséquence de cette porosité élevée est que l'on peut interpénètrer des films relativement épais tout en conservant une bonne tenue mécanique des films formés.

L'épaisseur du film et la conductivité intrinsèque sont essentielles pour utiliser de tels films comme couche de blindage aux ondes centimètriques, décimétriques et micrométriques (infrarouges). L'intérêt d'un film polymère conducteur à impédance variable selon l'invention est qu'il permet d'ajuster progressivement l'impédance du milieu le long du chemin de propagation de l'onde, de l'impédance de l'air à l'impédance du support du film qui est généralement voisine de zéro. Le fait d'avoir une interface air-polymère d'impédance adaptée permet d'annuler la réflexion de l'onde incidente. L'onde électromagnétique pénétrant dans le film selon l'invention sera en grande partie dissipée sous forme thermique à l'intérieur du film.

La formation d'un film homogène de polymère à partir de suspensions aqueuses de latex macromoléculaire comprend trois étapes principales dont chacune influencera les qualités physiques, chimiques et surtout mécaniques du film.

La première étape est celle de l'évaporation isotherme de l'eau, dominée en grande partie par des paramètres physiques tels que la température, la pression, l'aération de la surface, etc. Ces grandeurs sont généralement indépendantes du matériau. En fait, au cours de cette étape, les particules de latex s'ignorent entre elles et leur interaction est donc faible.

La seconde étape est celle de la coalescence ou mise en contact irréversible des particules de latex en vue de la densification maximale. Cette étape et la suivante sont en partie dominées par les caractéristiques internes de la dispersion telles que la taille des particules et leur dispersion, la force de cisaillement de la particule qui dépend surtout de la température de transition vitreuse du polymère, la nature et la quantité des charges de surface susceptibles de créer une double couche qui par sa rigidité empêche les particules de coalescer.

La coalescence se poursuit par l'étape de maturation. Le film polymérique en apparence homogène est encore constitué d'une juxtaposition de billes de latex, déformées et plus ou moins interpénétrées en un réseau cubique face centrée ou hexagonal compact. Au microscope le film présente la structure caractéristique en losange ou "nids d'abeille". Cette étape d'interdiffuson est généralement lente et dépend en grande partie de la température de filmification par rapport à la température de transition vitreuse du latex ainsi que de la polarité des groupes de surface. Les propriétés mécaniques et de transport (perméabilité, résistance électrique, etc.) sont alors des paramètres importants rendant compte de la bonne qualité du film formé. On observe à ce niveau une très forte perméabilité à la vapeur qui diminue avec le temps de maturation.

En augmentant la taille monodispersée des particules de latex, on augmentera la taille des pores dans lesquels s'effectueront la croissance du polymère conducteur. On peut trouver un compromis pour lequel les particules de latex sont suffisamment interpénétrées (d'où une bonne résistance mécanique) et les pores de taille suffisante pour commencer et bien favoriser l'électropolymérisation.

Dans le cas des suspensions aqueuses de latex, l'arrêt de la réaction d'interpénétration des particules peut être effectué par lyophilisation de l'eau résiduelle.

A titre d'exemple, on va décrire la préparation de quelques films selon l'invention. On part d'un latex macromoléculaire filmogène, par exemple de type styrène-acrylate de butyle, pour obtenir une matrice de polymère. Cette matrice peut être obtenue par polymérisation en émulsion aqueuse en présence, soit de persulfate de potassium pour avoir des particules chargées de groupes sulfate ou sulfonate, soit d'acide azocarboxylique pour avoir des charges surfaciques de type carboxyle.

Suivant le rapport styrène-acrylate, on peut ajuster la température de transition vitreuse du polymère obtenu. Dans un premier temps, la suspension aqueuse de latex est concentrée à l'évaporateur rotatif (rotavapor). Ensuite elle est déposée régulièrement sur un support conducteur, par exemple par la méthode dite à la tournette. Il est avantageux d'utiliser comme support conducteur un verre ITO (oxyde mixte d'étain et d'indium) qui procurera à la matrice une surface rigoureusement lisse. Pour ralentir et contrôler le processus d'interpénétration des particules de latex, l'évaporation de l'eau est effectuée à une température inférieure à celle de la transition vitreuse. On évite ainsi les phénomènes de craquelures du film.

Le support conducteur recouvert de la matrice polymérique obtenue est alors plongé dans une cellule électrochimique où l'on réalisera l'électropolymérisation du polymère conducteur. Le support conducteur sert alors d'anode. La cellule peut comprendre aussi une cathode au calomel et une contre-électrode constituée par un fil de platine. La cellule est remplie d'un solvant tel que l'acétonitrile dans lequel on a dissous le monomère à électrodéposer. On a également introduit dans le solvant un dopant d'électropolymérisation tel que le tétrafluoroborate de tétraéthlylammonium $(C_2 H_5)_4 \ N^+BF_4{}^-$.

L'électropolymérisation est alors effectuée dans des conditions relativement standard à l'aide d'un bipotentiostat selon l'art connu. En fonction de la porosité, de l'épaisseur de la matrice et surtout de son impédance électrique, il est souvent nécessaire d'augmenter la tension de la cellule comparée à ce qu'elle devrait être s'il n'y avait à électropolymériser que sur l'électrode ITO non recouverte de la matrice. L'homogénéité des lignes de champ électrique entre la cathode au calomel et l'anode de dépôt est essentielle pour obtenir une grande surface de latex interpénétrée de polymère conducteur la plus homogène possible.

Généralement la matrice gonfle dans le solvant. L'interpénétration est alors doublement efficace à cause d'une part de ce gonflement et d'autre part de l'importante porosité naturelle de la matrice. Dans ces conditions, les films, qui sont facilement détachables du support ITO, présentent une très grande homogénéité et une grande densité en polymère conducteur interpénétré.

En jouant sur la température et sur la tension aux électrodes, on peut obtenir un film de polymère interpénétré totalement diélectrique sur la face en contact avec le solvant de la cellule et présentant une conductibilité de type métallique sur la face en contact avec l'anode.

Dans le tableau 1 placé en fin de description, on a reporté les valeurs de conductivité obtenues par mesure quatre pointes sur les deux faces de plusieurs dépôts. Les films référencés I à III sont des films selon l'invention tandis que le film référencé IV est un film selon l'art connu. Les films I et II ont pour matrice un film obtenu à partir d'un latex de type styrène-acrylate de butyle (50% en poids de styrène pour 50% en poids d'acrylate). Le film III a pour matrice un film obtenu à partir d'un latex d'acrylate de butyle seul. Les particules sont monodisperses et la taille des particules de latex peut être ajustée entre 200 et 600 nm. Le monomère à électropolymériser est du bithiophène dans les cas des films I et III et du bithiophène $\beta$-substitué par un groupement dodécyle $(CH_2)_{11} \ CH_3$ dans le cas du film II. Leur poids dans le film obtenu sera d'environ 15%. Pour les films I à III on a indiqué la tension d'électrodépôt. Le film IV a été obtenu par mélange d'un adhésif à base de résine éthoxyline connu sous la marque déposée Araldite et de bithiophène à raison de plus de 20% de bithiophène dans le volume total de mélange.

Le tableau 1 montre bien que les films selon l'invention (films I à III) ont des conductivités nettement différentes selon l'une ou l'autre de leurs faces. Par contre, le film selon l'art connu (film IV) a des conductivités superficielles qui ne varient pratiquement pas d'une face à l'autre.

Les charges conductrices utilisables sont des monomères hétérocycliques substitués ou non. En dehors du bithiophène, on peut citer le pyrrole substitué ou non, le thiophène substitué ou non.

Une autre technique de dépôt du film polymère conducteur est la suivante. On peut faire préalablement sur les pièces à recouvrir l'électrodéposition du latex macromoléculaire dans les mêmes conditions de voltage que celles mises en oeuvre pour la formation de peintures anodiques. On introduit ensuite dans le mélange réactionnel le monomère conducteur et son dopant et on effectue l'électropolymérisation du monomère au travers de la matrice préalablement déposée.

L'anode métallique peut avoir la forme appropriée pour recouvrir d'une couche absorbante telle ou telle partie métallique de l'objet à blinder. Par exemple, il peut s'agir d'un sailli d'aile ou de cabine ou de la structure métallique d'un radôme.

Les latex peuvent être eux-mêmes magnétiques afin d'obtenir une couche diélectrique à propriétés magnétiques. L'orientation des dipôles magnétiques des latex peut être faite préalablement, c'est-à-dire avant la phase de coalescence.

Dans le tableau 2 placé en fin de description, on a comparé certaines caractéristiques diélectriques à 9GHz d'un film selon l'invention (film V) à d'autres films de l'art connu (films VI à XI) et à un film XII dont la matrice n'est pas obtenue à partir d'un latex mais pour lequel on a diffusé du bithiophène par électropolymérisation.

Le film V a pour matrice un film obtenu à partir d'un latex de type styrène-acrylate de butyle (50% en poids de styrène pour 50% en poids d'acrylate) et le monomère électropolymérisé est du bithiophène (qui représente 15% du poids du film obtenu). Les films VI à XI ont été obtenus par mélange. Le film VI est un mélange de polycarbonate (polycarbonate de bisphénol A) et de bithiophène (environ 20% en poids). Le film VII est un mélange d'alcool polyvinylique (PVA) et de bithiophène (environ 20% en poids). Le film VIII est un mélange d'Araldite et de bithiophène. Les films IX, X et XI sont des mélanges de polychlorure de vinyle avec respectivement 16, 30 et 41% de bithiophène par rapport au volume total. Le film XII a pour matrice un film de poly n-hexyl méthacrylate déposé sur un support conducteur (verre ITO) et obtenu par évaporation d'un solvant. Par électropolymérisation on a diffusé dans la matrice obtenue du bithiophène.

Le tableau 2 mentionne, en fonction de l'épaisseur des films, les valeurs de leurs permittivités (parties réelles $\epsilon'$ et imaginaires $\epsilon''$) et de leur conductivités moyennes $<\sigma>$. Les valeurs de permittivités ont été déterminées à 9GHz par des mesures de perturbations de cavité résonnante utilisée en transmission. La conductivité moyenne est déduite des mesures de $\epsilon''$ à 9GHz. D'après ce tableau, on constate que la conductivité moyenne est toujours plus importante pour le film V (film à base de latex interpénétré) que pour les autres films chargés de polybithiophène. Elle reste en particulier plus importante que celle du film XII obtenu à partir de l'évaporation d'un solvant et interpénétré aussi de polymère conducteur à base de bithiophène. C'est à cause de la faible porosité de la matrice de ce film que la conductivité est si basse malgré sa très faible épaisseur ($6\mu$) qui a favorisé la diffusion du bithiophène.

Pour pouvoir obtenir des conductivités moyennes approchant celle du film V, les films X et XI ont été très chargés en bithiophène (respectivement 30 et 41% du volume du film) ce qui rend ces films très cassants.

On peut améliorer nettement les proprétés absorbantes microondes des films selon l'invention en insérant, en plus des charges électriques disposées régulièrement, des charges magnétiques dans le coeur des particules de latex. Cela permet d'obtenir des films à propriétés magnétiques et diélectriques.

| Film | Epaisseur | Tension Electrodépôt | $\sigma$ Air/polymère $(\Omega^{-1}\mathrm{xcm}^{-1})$ | $\sigma$ Polymère/anode $(\Omega^{-1}\mathrm{xcm}^{-1})$ |
|---|---|---|---|---|
| I | $20\mu$ | 4V | $2.10^{-3}$ | $0,405$ |
|   | $45\mu$ | 4V | $1,47.10^{-4}$ | $0,1$ |
| II | $250\mu$ | 4V | $\approx 10^{-5}$ | $5.10^{-3}$ |
| III | $225\mu$ | 4V | $3,31.10^{-5}$ | $7.10^{-3}$ |
| IV (comparaison) | $135\mu$ | | $8,7.10^{-6}$ | $7,8.10^{-6}$ |

**TABLEAU I**

| Film | Epaisseur | $\mathcal{E}'$ | $\mathcal{E}''$ | $<\sigma>$ $(\Omega^{-1} \times cm^{-1})$ |
|---|---|---|---|---|
| V | 40μ | 7 | 10 | $6,3.10^{-2}$ |
| VI (Comparaison) | 60μ | 3,4 | 1,1 | $5,7.10^{-3}$ |
| VII (Comparaison) | 380μ | 3,3 | 1,2 | $6,2.10^{-3}$ |
| VIII (Comparaison) | 125μ | 1,1 | 0,17 | $8,9.10^{-3}$ |
| IX (Comparaison) | 170μ | 4,76 | 1,6 | $8,4.10^{-3}$ |
| X (Comparaison) | 150μ | 4,82 | 2,21 | $1,16.10^{-2}$ |
| XI (Comparaison) | 150μ | 3,03 | 2,3 | $1,2.10^{-2}$ |
| XII (Comparaison) | 6μ | 2,5 | 0,047 | $2,5.10^{-4}$ |

## TABLEAU 2

## Revendications

**1.** Film polymère composite conducteur de l'électricité, apte à être utilisé pour le revêtement d'objets, formé d'une matrice organique constitué de particules d'un latex macromoléculaire filmogène et de charges conductrices constituées par un polymère conducteur réparti dans la matrice, caractérisé en ce que le film de la matrice est constitué de particules partiellement coalescées de façon à former un réseau avec des pores entre les particules, et avec du polymère conducteur dans les pores.

**2.** Film polymère composite selon la revendication 1, caractérisé en ce que le latex est de type styrène-acrylate de butyle.

**3.** Film polymère composite selon la revendication 1, caractérisé en ce que le latex est de type acrylate de butyle.

**4.** Film polymère composite selon la revendication 1, caractérisé en ce que le latex est magnétique.

**5.** Film polymère composite selon l'une quelconque des revendications 1 à 4, caractérise en ce que ledit polymère conducteur diffusé est à base de monomère hétérocyclique substitué ou non.

**6.** Film polymère composite selon la revendication 5, caractérisé en ce que ledit monomère est du thiophène, du bithiophène ou du pyrrole substitué ou non.

**7.** Film polymère composite selon la revendication 6, caractérisé en ce que ledit monomère est du bithiophène $\beta$-substitué par un groupement dodécyle $(CH_2)_{11}\,CH_3$.

**8.** Procédé de fabrication d'un film polymère composite conducteur de l'électricité, caractérisé en ce qu'on forme d'abord, sur un support conducteur, une matrice organique poreuse partiellement coalescée, à partir d'un latex macromoléculaire filmogène, puis on place le support dans une cellule électrochimique et on forme du polymère conducteur dans les pores, par électropolymérisation d'un monomère du polymère conducteur.

**9.** Procédé selon la revendication 8 caractérisé en ce que la matrice est déposée sur son support à partir d'une suspension aqueuse et la coalescence est effectuée par l'évaporation de l'eau.

**10.** Procédé selon la revendication 8, caractérisé en ce que la matrice est déposée sur son support par électrodéposition.

**11.** Procédé selon l'une des revendications 8 à 10, caractérisé en ce que l'on arrête la coalescence par lyophilisation de l'eau contenue dans la matrice.

## Claims

**1.** Electrically conductive composite polymer film suitable for being employed for coating objects, made up of an organic matrix consisting of particles of a film-forming macromolecular latex and of conductive fillers consisting of a conductive polymer distributed in the matrix, characterised in that the film of the matrix consists of partially coalesced particles so as to form a network with the pores between the particles and with the conductive polymer in the pores.

**2.** Composite polymer film according to Claim 1, characterised in that the latex is of styrene-butyl acrylate type.

**3.** Composite polymer film according to Claim 1, characterised in that the latex is of butyl acrylate type.

**4.** Composite polymer film according to Claim 1, characterised in that the latex is magnetic.

**5.** Composite polymer film according to any one of Claims 1 to 4, characterised in that the said distributed conductive polymer is based on heterocyclic monomer, substituted or otherwise.

**6.** Composite polymer film according to Claim 5, characterised in that the said monomer is thiophene, bithiophene or pyrrole, substituted or otherwise.

**7.** Composite polymer film according to Claim 6, characterised in that the said monomer is bithiophene $\beta$-substituted by a $(CH_2)_{11}CH_3$ dodecyl group.

**8.** Process for the manufacture of an electrically conductive composite polymer film, characterised in that a partially coalesced porous organic matrix is first of all formed, on a conductive support, from a film-forming macromolecular latex, then the support is placed in an electrochemical cell and conductive polymer is formed in the pores by electropolymerisation of a monomer of the conductive polymer.

**9.** Process according to Claim 8, characterised in that the matrix is deposited on its support from an aqueous suspension and the coalescence is performed by the evaporation of water.

**10.** Process according to Claim 8, characterised in that the matrix is deposited on its support by electrodeposition.

**11.** Process according to one of Claims 8 to 10, characterised in that the coalescence is stopped by freeze-drying the water contained in the matrix.

**Patentansprüche**

1. Elektrisch leitender polymerer Verbundfilm, der zum Bedecken von Gegenständen verwendet werden kann und aus einer organischen, aus Teilchen eines filmbildenden makromolekularen Latex bestehenden Matrix und aus einem leitfähigen, in der Matrix verteilten Polymer bestehenden leitfähigen Füllstoffen gebildet ist, dadurch gekennzeichnet, daß der Film der Matrix aus teilweise derart miteinander verbundenen Teilchen besteht, daß ein Netz mit zwischen den Teilchen befindlichen Poren und mit dem leitfähigen Polymer in den Poren gebildet wird.

2. Polymerer Verbundfilm nach Anspruch 1, dadurch gekennzeichnet, daß der Latex vom Typ Styrol-Butylacrylat ist.

3. Polymerer Verbundfilm nach Anspruch 1, dadurch gekennzeichnet, daß der Latex vom Typ Butylacrylat ist.

4. Polymerer Verbundfilm nach Anspruch 1, dadurch gekennzeichnet, daß der Latex magnetisch ist.

5. Polymerer Verbundfilm nach einem der Ansprüche 1 bis 4, dadurch gekennzeichnet, daß das verteilte leitfähige Polymer auf einem substituierten oder unsubstituierten heterozyklischen Monomer basiert.

6. Polymerer Verbundfilm nach Anspruch 5, dadurch gekennzeichnet, daß das Monomer ein substituiertes oder unsubstituiertes Thiophen, Bithiophen oder Pyrrol ist.

7. Polymerer Verbundfilm nach Anspruch 6, dadurch gekennzeichnet, daß das Monomer ein durch eine Dodecylgruppe $(CH_2)_{11}CH_3$ $\beta$-substituiertes Bithiophen ist.

8. Verfahren zur Herstellung eines elektrisch leitfähigen polymeren Verbundfilms, dadurch gekennzeichnet, daß man zunächst auf einem leitfähigen Träger eine teilweise zusammenhängende poröse organische Matrix, ausgehend von einem filmbildenden makromolekularen Latex, bildet, dann den Träger in eine elektrochemische Zelle verbringt und in den Poren durch Elektropolymerisation eines Monomers ein leitfähiges Polymer bildet.

9. Verfahren nach Anspruch 8, dadurch gekennzeichnet, daß die Matrix ausgehend von einer wäßrigen Suspension auf ihrem Träger abgeschieden wird und daß die Koaleszenz durch Verdampfung des Wassers bewirkt wird.

10. Verfahren nach Anspruch 8, dadurch gekennzeichnet, daß die Matrix auf ihrem Träger durch Elektroabscheidung abgeschieden wird.

11. Verfahren nach einem der Ansprüche 8 bis 10, dadurch gekennzeichnet, daß man die Koaleszenz durch Gefriertrocknen des in der Matrix enthaltenen Wassers zum Stillstand bringt.